# EUROPEAN PATENT APPLICATION

(11) **EP 4 592 921 A1**
(43) Date of publication of application: **30.07.2025**
(21) Application number: 22962145.3
(22) Date of filing: 12.10.2022
(51) Int. Cl.: G06Q 10/08, B25J 11/00, B25J 9/16, G06T 19/00, G06T 13/40, F25D 11/02

(54) **LOGISTICS SYSTEM USING METAVERSE AND CONTROL METHOD THEREOF**

(71) Applicant: LG Electronics Inc., Yeongdeungpo-gu Seoul 07336 (KR)
(72) Inventor: LEE, Haklim, Seoul 06772 (KR); CHEON, Jeeyoung, Seoul 06772 (KR)
(74) Representative: Vossius & Partner Patentanwälte Rechtsanwälte mbB
(86) International application number: PCT/KR2022/015343
(87) International publication number: WO 2024/080394

(57) **Abstract**

The present disclosure relates to a logistics system using metaverse that can manage personal items stored in a common warehouse in the real world by using a personal virtual warehouse in a virtual space, and a method for controlling the same, and if a request for provision of a personal virtual warehouse is received from the user terminal, may provide a personal virtual warehouse in a virtual space to the user terminal, if a request for storage or release of items is received from the user terminal through the personal virtual warehouse in the virtual space, control the delivery robot to collect the items of the user in the real world and deliver the items of the user to the common warehouse or to collect the items of the user stored in the common warehouse and deliver the items of the user to the user's house, and if the storage or release of items by the delivery robot is completed, update the information on the item storage status of the personal virtual warehouse in the virtual space based on the information on the actual item storage status of the common warehouse in the real world.

## Description

### [Technical Field]

The present disclosure relates to a logistics system using metaverse that can manage personal items stored in a common warehouse in the real world by using a personal virtual warehouse in a virtual space, and a method for controlling the same.

### [Background Art]

In general, the delivery method in the last mile delivery stage has evolved from a system in which consumers pick up items directly from a parcel box to a system in which delivery robots deliver items to consumers' front doors from automated warehouse-type parcel boxes.

However, in residential complexes such as apartments and officetels, there are significant spatial limitations that make it difficult to apply a delivery system using an automatic warehouse-type parcel box.

The reason is that automatic warehouse-type parcel boxes have to have a very large space.

Therefore, in the future, there is a need to develop a logistics system that can improve user convenience at a minimal cost while increasing spatial efficiency by using an automatic warehouse-type parcel box without being restricted by spatial constraints.

### [Disclosure]

### [Technical Problem]

An object of the present disclosure is to solve the above-mentioned problems and other problems.

An object of the present disclosure is to provide a logistics system utilizing metaverse that can improve user convenience at a minimal cost while increasing spatial efficiency by utilizing a common warehouse without being restricted by spatial constraints, by when receiving a request for storing or releasing goods through a personal virtual warehouse in a virtual space, collecting the user's items in the real world through a delivery robot and delivering them to a common warehouse, or collecting the user's items stored in the common warehouse and delivering them to the user's house.

### [Technical Solution]

A logistics system using metaverse according to an embodiment of the present disclosure includes a common warehouse storing items of a plurality of users; a delivery robot delivering the items of the user; a server controlling the delivery robot; and, a user terminal communicating with the server, in which the server, if a request for provision of a personal virtual warehouse is received from the user terminal, may provide a personal virtual warehouse in a virtual space to the user terminal, if a request for storage or release of items is received from the user terminal through the personal virtual warehouse in the virtual space, controls the delivery robot to collect the items of the user in the real world and deliver the items of the user to the common warehouse or to collect the items of the user stored in the common warehouse and deliver the items of the user to the user's house, and if the storage or release of items by the delivery robot is completed, update the information on the item storage status of the personal virtual warehouse in the virtual space based on the information on the actual item storage status of the common warehouse in the real world.

A method for controlling a logistics system according to an embodiment of the present disclosure is a method for controlling a logistics system performed by a server communicating a delivery robot and a user terminal may include receiving a request for providing a personal virtual warehouse from the user terminal; providing the personal virtual warehouse in a virtual space to the user terminal; receiving a request for storage or release of items through a personal virtual warehouse in the virtual space from the user terminal; controlling the delivery robot to collect the user's items in the real world and deliver the user's items to the common warehouse if the request for storing items is received, or to collect the user's items stored in the common warehouse in the real world and deliver the user's items to the user's house if the item release request is received; and updating the information on the item storage status of the personal virtual warehouse in the virtual space based on the information on the actual item storage status of the common warehouse in the real world if the item storage or item release by the delivery robot is completed.

### [Advantageous Effect]

According to one embodiment of the present disclosure, a logistics system using metaverse, if receiving a request for storing or releasing items through a personal virtual warehouse in a virtual space, collects the user's items in the real world through a delivery robot and delivers the user's items to a common warehouse, or collects the user's items stored in the common warehouse and delivers the user's items to the user's house, thereby increasing spatial efficiency by utilizing a common warehouse without being restricted by spatial constraints and improving user convenience at a minimal cost.

In this way, the present disclosure utilizes robots as a medium between the metaverse/virtual space and the real world, and utilizes a specialized storage system warehouse for items that are difficult to store at home, thereby increasing the efficiency of storage space at home and enabling efficient use of space.

In addition, the present disclosure can provide a more realistic service by narrowing the gap between a virtual warehouse and a real-world common warehouse by utilizing a robot as a medium.

In addition, the present disclosure can provide care services through linked services for each item.

For example, the present disclosure can maximize user convenience by allowing users to immediately perform cumbersome tasks that must be performed separately, such as laundary, cleaning, repairing, and disposing of items, through additional linked services.

In addition, the present disclosure has the advantage that the subdivision of the warehouse can be configured in various ways according to the user's preference, and the expansion of the warehouse is infinite.

In addition, the present disclosure can have the effect of moving beyond simple storage of existing items through the metaverse to storing and managing items, and using the items immediately at any time by using a robot as an intermediary when the items are to be used.

### [Description of Drawings]

FIG. 1 is a view for explaining a logistics system according to one embodiment of the present disclosure.
FIG. 2 is a view for explaining a logistics system using a personal virtual warehouse according to one embodiment of the present disclosure.
FIG. 3 is a view for explaining a process of storing items in a logistics system according to one embodiment of the present disclosure.
FIG. 4 is a view for explaining a parcel receiving process of a logistics system according to one embodiment of the present disclosure.
FIG. 5 is a view for explaining a process for storing and washing items in a logistics system according to an embodiment of the present disclosure.
FIG. 6 is a view for explaining a personal virtual warehouse of a logistics system according to one embodiment of the present disclosure.
FIGS. 7 to 9 are views for explaining a process of entering a specific category warehouse of a personal virtual warehouse according to an embodiment of the present disclosure.
FIG. 10 is a view for explaining the interior of a specific category warehouse of a personal virtual warehouse according to one embodiment of the present disclosure.
FIG. 11 and FIG. 12 are views for explaining a process for providing an appliance inspection service corresponding to an appliance category warehouse of a personal virtual warehouse according to one embodiment of the present disclosure.
FIG. 13 and FIG. 14 are views for explaining a process for providing a storage period notification service corresponding to a frozen category warehouse of a personal virtual warehouse according to one embodiment of the present disclosure.
FIG. 15 is a view for explaining a process of expanding the capacity of a personal virtual warehouse according to one embodiment of the present disclosure.
FIG. 16 is a flowchart for explaining a control process of a logistics system according to one embodiment of the present disclosure.

### [Best Mode]

Hereinafter, embodiments disclosed in the present specification will be described in detail with reference to the attached drawings, and regardless of the drawing symbols, identical or similar components will be given the same reference numerals and redundant descriptions thereof will be omitted. The suffixes "module" and "part" for components used in the description below are assigned or mixed in consideration of easiness in writing the specification and do not have distinctive meanings or roles by themselves. In addition, when describing embodiments disclosed in this specification and if it is determined that a specific description of a related known technology may obscure the gist of the embodiments disclosed in this specification, the detailed description thereof will be omitted. In addition, the attached drawings are only intended to facilitate easy understanding of the embodiments disclosed in this specification, and the technical ideas disclosed in this specification are not limited by the attached drawings, and should be understood to include all modifications, equivalents, and substitutes included in the spirit and technical scope of the present disclosure.

Terms including ordinal numbers, such as first, second, or the like, may be used to describe various components, but the components are not limited by the terms. The terms are used only to distinguish one component from another.

When it is said that a component is "connected" or "accessed" to another component, it should be understood that it may be directly connected or accessed to that other component, but that there may be other components in between. On the other hand, when it is said that a component is "directly connected" or "directly accessed" to another component, it should be understood that there are no other components in between.

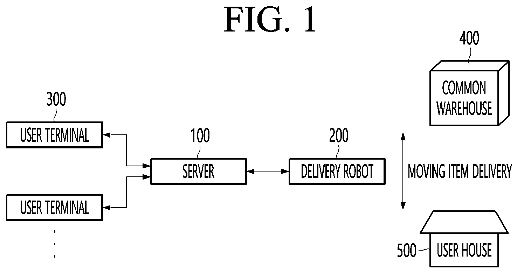

FIG. 1 is a view for explaining a logistics system according to one embodiment of the present disclosure.

As illustrated in FIG. 1, the logistics system of the present disclosure may include a common warehouse 400 that stores items of a plurality of users, a delivery robot 200 that delivers the items of the users, a server 100 that controls the delivery robot 200, and a user terminal 300 that communicates with the server.

Here, the common warehouse 400 may include a base-type integrated warehouse or the like, where all users' items can be stored in an integrated manner.

The common warehouse 400 can be used in conjunction with the management server of the user's residence, such as a surrounding apartment complex.

In this way, the common warehouse 400 can be individually installed according to the function thereof as a warehouse in a real world.

For example, since it is very important to maintain temperature and humidity in a clothing warehouse while it is being stored, separate constant temperature and humidity equipment can be installed for collective storage, and a cold storage warehouse can be collectively stored by installing a cold chain to maintain a constant sub-zero temperature.

Additionally, the delivery robot 200 may include any robot capable of transporting the user's items to a common warehouse 400 or the user's house 500.

Next, the user terminal 300 may include all of a standing device such as a personal computer (PC), network TV, hybrid broadcast broadband TV (HBBTV), smart TV, or internet protocol TV (IPTV) that can implement an eXtended Reality (XR) device, and a mobile device (or handheld device) such as a smart phone, a tablet PC, a notebook, or a personal digital assistant (PDA).

In addition, the network that communicates between the user terminal 300 and the server 300, or the robot 200 and the server 300, may mean a network that constitutes part of the cloud computing infrastructure or exists within the cloud computing infrastructure. Here, the cloud network 10 may be configured using a 3G network, a 4G or Long Term Evolution (LTE) network, a 5G network, or the like.

In other words, a user terminal 300 and a server 300, or a robot 200 and a server 300, can be connected to each other through a cloud network, and can communicate with each other through a base station, but can also communicate directly with each other without going through a base station.

Next, the server 100, if a request for provision of a personal virtual warehouse is received from a user terminal 300, provides a personal virtual warehouse in a virtual space to the user terminal 300, if a request for storage or release of items is received from the user terminal 300 through the personal virtual warehouse in the virtual space, controls a delivery robot 200 to collect the user's items in the real world and deliver the user's items to a common warehouse 400, or to collect the user's items stored in the common warehouse 400 and deliver the user's items to the user's house 500, and if the storage or delivery of items by the delivery robot 200 is completed, the personal virtual warehouse's item storage status information can be updated in the virtual space based on the information on the actual item storage status of the common warehouse 400 in the real world.

Here, when providing a personal virtual warehouse in a virtual space, the server 100 can check whether the user owns a personal virtual warehouse in the virtual space based on user information about the user terminal 300, and if the user owns a personal virtual warehouse, can provide the personal virtual warehouse in the virtual space to the user terminal 300.

In addition, when providing a personal virtual warehouse in a virtual space, if the user does not own a personal virtual warehouse, the server 100 can provide a personal virtual warehouse opening window to a user terminal 300, receive opening information through the personal virtual warehouse opening window, and create a personal virtual warehouse based on the received opening information.

For example, when providing a personal virtual warehouse opening window, the server 100 can provide a personal virtual warehouse opening window that includes a warehouse category setting entry, a category-specific warehouse capacity setting entry, a total warehouse capacity setting entry, an automatic warehouse capacity setting entry for user-stored items, and an opening information input completion button.

In some cases, if a user input for selecting an automatic warehouse capacity setting entry in a personal virtual warehouse opening window is received, the server 100 can request the user's stored item information to the user terminal 300, and if the user's stored item information is received from the user terminal 300, automatically set a warehouse category based on the stored item information, automatically calculates the warehouse capacity by category, and provides recommendation information including the automatically set warehouse category information and the automatically calculated warehouse capacity information by category to the user terminal 300.

Here, when automatically calculating the warehouse capacity by category, the server 100 can predict the user's item storage tendency based on the user's personal information and automatically calculate the warehouse capacity by category by reflecting the predicted item storage tendency.

For example, when predicting a user's tendency to store items, the server 100 may predict the user's tendency to store items based on personal information including the user's living environment, the degree of item management, and the time of item use, but this is only an example and is not limited thereto.

Next, when providing a personal virtual warehouse in a virtual space, the server 100 may provide a personal virtual warehouse including plurality of category warehouses classified by item category in the virtual space.

Here, the server 100 can provide a personal virtual warehouse in which each category warehouse is assigned an individual category name and category warehouses assigned individual category names are arranged horizontally or stacked vertically.

For example, individual category names may include, but are not limited to, clothing, appliance items, delivery, refrigeration, and freezing.

The plurality of category warehouses may include a clothing category warehouse for storing clothing items, an appliance category warehouse for storing appliance items, a parcel category warehouse for storing delivery items, a refrigerated category warehouse for storing refrigerated items, and a refrigerated category warehouse for storing frozen items.

In addition, the server 100 may have plurality of category warehouses with different shapes, and the shape of each category warehouse may have a representative shape related to an individual category name, but this is only an example and is not limited thereto.

In some cases, the server 100 may have plurality of category warehouses with different colors, and the color of each category warehouse may have a representative color related to an individual category name.

Additionally, the server 100 may provide a capacity indicator on the surface of each category warehouse that displays the current item storage capacity compared to the total capacity of the category warehouse.

**In** addition, the server 100 may further provide a warehouse creation menu to provide an additional category warehouse in addition to plurality of category warehouses in a personal virtual warehouse in the virtual space.

Here, the server 100 can provide an additional category warehouse to the personal virtual warehouse if the user character in the virtual space selects the warehouse creation menu.

Next, when providing a personal virtual warehouse in a virtual space, the server 100 can create and provide a preset user character in the virtual space, and when the user character enters the personal virtual warehouse, plurality of category warehouses are arranged in the personal virtual warehouse, and personal virtual warehouse information can be displayed on a specific internal surface of the personal virtual warehouse.

Here, the personal virtual warehouse information may include information on the number of category warehouses, information on the total number of items stored in the personal virtual warehouse, and information on the ratio of the item storage capacity to the total capacity of the personal virtual warehouse, but this is only an example and is not limited thereto.

**In** addition, the server 100 can control so that a space movement area of a specific shape is formed on the floor surface surrounding a specific category warehouse if the user character approaches the specific category warehouse, so that warehouse information on the specific category warehouse and an enter button on the surface of the specific category warehouse if the user character enters the space movement area, and so that the user character moves in space to the inside of the specific category warehouse if the user character selects the enter button.

Here, the server 100 can provide overall item information on items stored in a specific category warehouse and individual item information on each stored item when a user character enters a specific category warehouse.

For example, overall item information may include information on total number of stored items and information on the number of items stored by entry, classified by specific entry, and individual item information may include storage status information, storage period information, and user request selection item information.

Here, the user request selection item information may include release request item information, receipt request item information, disposal request item information, and specific service request item information, but this is only an example and is not limited thereto.

**In** addition, specific service request entry information may include a laundry service request item if the item is clothing, and an inspection service entry, a cleaning service entry, and a repair service entry if the item is an appliance, but this is only an example and is not limited thereto.

**In** addition, the server 100, if a user character enters a specific category warehouse, may provide a capacity indicator that displays information on the ratio of the storage capacity of items to the total capacity of a specific category warehouse, a user release input button for requesting release, a user receipt input button for requesting receipt, and a user capacity expansion input button for requesting capacity expansion.

Next, when the server 100 receives an item storage request, if the user character in the virtual space selects a specific category warehouse among plurality of category warehouses included in the personal virtual warehouse and selects a storage button for items, the server can receive an item storage request including information on the specific category warehouse selected by the user character from the user terminal 300.

Here, the server, when the server 100 controls the delivery robot 200, if an item storage request is received from the user terminal 300, can call the delivery robot 200 in the real world and control the delivery robot to move to the user's house 500, and if the user's items are completed being put into the delivery robot 200, control the delivery robot 200 loaded with the user's items to move to the common warehouse 400, and control the delivery robot 200 to store the user's items in a category warehouse corresponding to a specific category warehouse selected by the user character in the virtual space among plurality of category warehouses of the common warehouse 400, thereby completing the delivery of the user's items.

Next, the server 100, if delivery of the user's items is completed, can transmit a message to the user terminal indicating that the user's items have been stored in a specific category warehouse.

In addition, the server 100, when the delivery of the user's items is completed, can update the information on the item storage status corresponding to a specific category warehouse of the personal virtual warehouse in the virtual space.

Next, the server 100, after the delivery of the user's items is completed, if the user character in the virtual space selects a specific category warehouse containing the user's items among plurality of category warehouses included in the personal virtual warehouse, can transmit a list of user items stored in a specific category warehouse in the real world to the user terminal 300.

In some cases, the server 100, when receiving a request to release an item, if selecting a specific category warehouse among plurality of category warehouses included in the user character's personal virtual warehouse in the virtual space, select a user item to be released among the user items stored in the specific category warehouse, and then select an item release button, can receive an item release request including information on the specific category warehouse selected by the user character and information on user release items from the user terminal 300.

In addition, the server 100, when controlling the delivery robot 200, if receiving a request for item releasey from the user terminal 300, can call the delivery robot 200 in the real world and control the delivery robot to move to a specific category warehouse of the common warehouse 400, and when the delivery robot 200 completes putting the user's items stored in the specific category warehouse, control the delivery robot 200 loaded with the user's items to move to the user's house, thereby completing the delivery of the user's items.

Here, if delivery of the user's items is completed, the server 100 can transmit a message to the user terminal 300 that the user's items have been released.

Next, when the delivery of the user's items is completed, the server 100 can update the information on the item storage status corresponding to a specific category warehouse of the personal virtual warehouse in the virtual space.

Next, the server 100, after the delivery of the user's items is completed, if the user character in the virtual space selects a specific category warehouse storing the user's items among plurality of category warehouses included in the personal virtual warehouse, can transmit a list of user items stored in a specific category warehouse in the real world to the user terminal 300.

In another case, the server 100, when controlling the delivery robot 200, if a parcel is received to a common warehouse in the real world, can transmit a parcel arrival message to a user terminal 300 corresponding to the recipient of the parcel, update information on the item storage status corresponding to the parcel category warehouse of the personal virtual warehouse in the virtual space, if the user character selects a parcel category warehouse in the virtual space, provide a list of parcels stored in the parcel category warehouse, if the user character selects a specific parcel and immediately selects a receipt request button, call the delivery robot 200 in the real world, control a delivery robot 200 to be called to move to a common warehouse 400, and control to receive a parcel and move to a user's house 500 to complete the delivery of the parcel.

Here, the server 100 can update the information on the item storage status corresponding to the parcel category warehouse of the personal virtual warehouse in the virtual space when parcel delivery is completed.

Next, the server 100, if the user character selects a specific parcel and selects the reservation receipt request button, can determine the date and time of the reserved receipt of the parcel, and if the date and time of the reserved receipt arrive in the real world, call the delivery robot 200 and control the delivery robot 200 to move to the common warehouse, and control the delivery robot 200 to receive the parcel and move to the user's house 500, thereby completing the delivery of the parcel.

In another case, the server 100, when receiving an item storage request, if the user character in the virtual space selects a specific category warehouse among a plurality of category warehouses included in the personal virtual warehouse and selects an item-specific service storage button, can receive an item-specific service storage request including information on the specific category warehouse selected by the user character from the user terminal 300.

Here, the item-specific service storage button may include a laundry service storage button if the item is clothing, and may include an inspection service storage button, a cleaning service storage button, and a repair service storage button if the item is an appliance, but this is only an example and is not limited thereto.

Next, the server 100, when controlling the delivery robot 200, if a request for storing a specific item service is received from the user terminal 300, can call the delivery robot 200 in the real world and control the delivery robot to move to the user's house 500, and if the user's item is completed being put into the delivery robot 200, control the delivery robot 200 loaded with the user's item to move to the service warehouse, and if a specific service for the user's item is completed in the service warehouse, control the delivery robot 200 to deliver the user's item for which the specific service has been completed to the common warehouse 400, and control the delivery robot 200 to store the user's item in a category warehouse corresponding to a specific category warehouse selected by the user character in the virtual space among a plurality of category warehouses in the common warehouse 400, thereby completing the delivery of the user's item.

Here, the server 100, if delivery of a user's items is completed, can transmit a message to the user terminal 300 that the user's items for which a specific service has been completed have been stored in a specific category warehouse.

In addition, the server 100, when the delivery of the user's items is completed, can update the information on the item storage status corresponding to a specific category warehouse of the personal virtual warehouse in the virtual space.

Next, the server 100, after the delivery of the user's items is completed, can transmit a list of user items stored in a specific category warehouse in the real world to the user terminal 300 when the user character in the virtual space selects a specific category warehouse containing the user's items among plurality of category warehouses included in the personal virtual warehouse.

In another case, the server 100, when storing the user's items in the common warehouse 400, if the user's items to be stored are items of a category that are used only in a specific season, can control the storage of the user's items by classifying the user's items by season.

Here, items in a category that are only used in a specific season may include items related to clothing and items related to appliance items, but this is only an example and is not limited thereto.

In addition, the server 100 can check the user's items stored in the common warehouse 400 in a seasonal cycle in the real world, select items needed for each season, and transmit an inspection request message for the selected items to the user terminal 300.

Here, the server 100, when checking the user's items, can check the user's items stored in the common warehouse 400 on a preset date or during a preset period before a specific season approaches.

In addition, the server 100, when an item inspection request is received from a user terminal 300, can request an external management company to inspect the corresponding user's item, and if the user's item inspection is completed, transmit the item inspection content to the user terminal 300, if the user character checks the item inspection content in the virtual space, provide an item service request button including a cleaning service request item, a repair service request item, and a disposal service request item in the virtual space, and if the user character selects the service request button, request the corresponding item service to the external management company in the real world.

In addition, the server 100, when storing a user's items in a common warehouse 400, if the items the user wish to store require refrigeration or freezing, can control the storage of the user's items by classifying the user's items by temperature.

Here, the server 100 can control the storage of the user's items by setting a storage period for the items if the items to be stored are items that require refrigeration or freezing and have an expiration date.

In addition, the server 100 can check the storage period for the user's items stored in the common warehouse 400 in the real world, and if there are items of the user whose storage end date is approaching, transmit a storage termination message including information on the remaining storage period to the user terminal 300 before the storage end date.

Next, the server 100, if the user character checks the storage termination message in the virtual space, can provide an item service request button including a storage period extension request entry, a removal request entry, and if the user character selects the service request button, a reservation removal request entry in the virtual space, control the provision of the corresponding item service in the real world.

In addition, the server 100, if receiving a request for capacity expansion for a personal virtual warehouse in a virtual space from a user terminal 300, can provide a full capacity contract window for the personal virtual warehouse to the user terminal 300, and if full capacity contract information for all stored items is provided and a corresponding cost is paid through the full capacity contract window from the user terminal 300, provide a personal virtual warehouse with the full capacity expanded in accordance with the full capacity contract information.

In another case, the server 100, if receiving a request for capacity expansion for a personal virtual warehouse in a virtual space from a user terminal 300, provide an individual capacity contract window for the personal virtual warehouse to the user terminal 300, and if individual capacity contract information for each stored item is provided and a corresponding cost is paid through the individual capacity contract window from the user terminal 300, provide a personal virtual warehouse with an expanded individual capacity for each stored item corresponding to the individual capacity contract information.

The server 100 of the present disclosure may be implemented as an integrated server, but may also be composed of a number of individual servers.

For example, the server 100 may include a metaverse server that provides a virtual space including a personal virtual warehouse to a user terminal 300, a control server that controls a delivery robot 200 to collect the user's items in the real world and deliver the user's items to a common warehouse 400 or to collect the user's items stored in the common warehouse 400 and deliver the user's items to the user's house 500 if a request for storing or releasing items is received from the user terminal 300 through the personal virtual warehouse in the virtual space, and a warehouse management server that updates information on the actual item storage status of the common warehouse 400 in the real world and manages the stored items if the storage or release of items by the delivery robot 200 is completed.

Here, the metaverse server can update the information on the item storage status of a personal virtual warehouse in a virtual space based on the information on the actual item storage status of a common warehouse 400 in the real world.

In this way, the present disclosure, if receiving a request for storing or releasing items through a personal virtual warehouse in a virtual space, can improve user convenience at a minimum cost while increasing spatial efficiency by utilizing a common warehouse without being restricted by spatial constraints by collecting the user's items in the real world through a delivery robot and delivering the user's items to a common warehouse, or by collecting the user's items stored in the common warehouse and delivering the user's items to the user's house.

The present disclosure utilizes robots as a medium between the metaverse/virtual space and the real world, and utilizes a specialized storage system warehouse for items that are difficult to store at home, thereby increasing the efficiency of storage space at home and enabling efficient use of space.

In addition, the present disclosure can provide a more realistic service by narrowing the gap between a virtual warehouse and a real-world common warehouse by utilizing a robot as a medium.

In addition, the present disclosure can provide care services through linked services for each item.

For example, the present disclosure can maximize user convenience by allowing users to immediately perform cumbersome tasks that must be performed separately, such as washing, cleaning, repairing, and disposing of items, through additional linked services.

In addition, the present disclosure has the advantage that the subdivision of the warehouse can be configured in various ways according to the user's preference, and the expansion of the warehouse is infinite.

In addition, the present disclosure can have the effect of moving beyond simple storage of existing items through the metaverse to storing and managing items, and using the items immediately at any time by using a robot as an intermediary when the items are to be used.

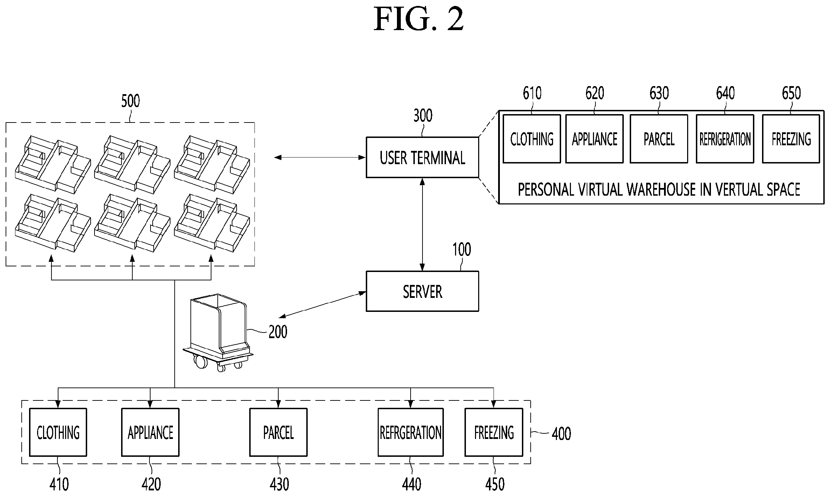

FIG. 2 is a view for explaining a logistics system using a personal virtual warehouse according to one embodiment of the present disclosure.

As illustrated in FIG. 2, the server 100 of the present disclosure can provide a personal virtual warehouse 600 in a virtual space to a user terminal 300 when a request for provision of a personal virtual warehouse is received from the user terminal 300.

Here, the personal virtual warehouse 600 of the virtual space may include plurality of category warehouses classified by item category.

For example, the plurality of category warehouses may include a clothing category warehouse 610 for storing clothing items, an appliance category warehouse 620 for storing appliance items, a parcel category warehouse 630 for storing parcel items, a refrigerated category warehouse 640 for storing refrigerated items, and a refrigerated category warehouse 650 for storing frozen items.

In this way, the personal virtual warehouse 600 of the virtual space can provide a personal virtual warehouse in which each category warehouse is assigned an individual category name and category warehouses assigned individual category names are arranged horizontally or stacked vertically.

For example, individual category names may include clothing, appliance items, delivery, refrigeration, and freezing, but this is only an example and is not limited thereto.

Additionally, plurality of category warehouses may have different shapes, or the shape of each category warehouse may have a representative shape related to an individual category name, but this is only an example and is not limited thereto.

In some cases, plurality of category warehouses may have different colors, and the color of each category warehouse may have a representative color related to the individual category name.

In addition, the server 100, if the server 100 of the present disclosure receives a request for storing or releasing items from a user terminal 300 through a personal virtual warehouse 600 in a virtual space, can control a delivery robot 200 to collect the user's items in the real world and deliver the user's items to a common warehouse 400, or to collect the user's items stored in the common warehouse 400 and deliver the user's items to the user's house 500.

Here, the common warehouse 400 may include plurality of category warehouses, similar to the personal virtual warehouse 600 in the virtual space.

For example, the common warehouse 400 may include a clothing warehouse 410 for storing clothing items, an appliance warehouse 420 for storing appliance items, a parcel warehouse 430 for storing parcel items, a refrigeration warehouse 440 for storing refrigerated items, and a freezing warehouse 450 for storing frozen items.

Next, the server 100 of the present disclosure, if the storage or release of items by the delivery robot 200 is completed, can update the information on the item storage status of the personal virtual warehouse 600 in the virtual space based on the information on the actual item storage status of the common warehouse 400 in the real world.

In this way, the present disclosure, as a logistics system utilizing the metaverse, may include a basic house where a user resides in the real world and a base-type integrated warehouse that manages each house by grouping them into units.

Here, integrated warehouses may also be installed in common spaces that are not frequently used, such as basements in primary housing.

Additionally, users can access their own virtual space by utilizing smart devices such as smartphones, home wall pads, VR, or the like, and manage their own items by entering/releasing them within the virtual space, storing them, delivering them, and managing appliance items, or the like.

At this time, the present disclosure can utilize a delivery robot, which is an intermediary connecting virtual space and the real world, to enter and release user items, and can be configured to connect to a robot control server, or the like, so that user actions in the virtual space can occur in the actual real world.

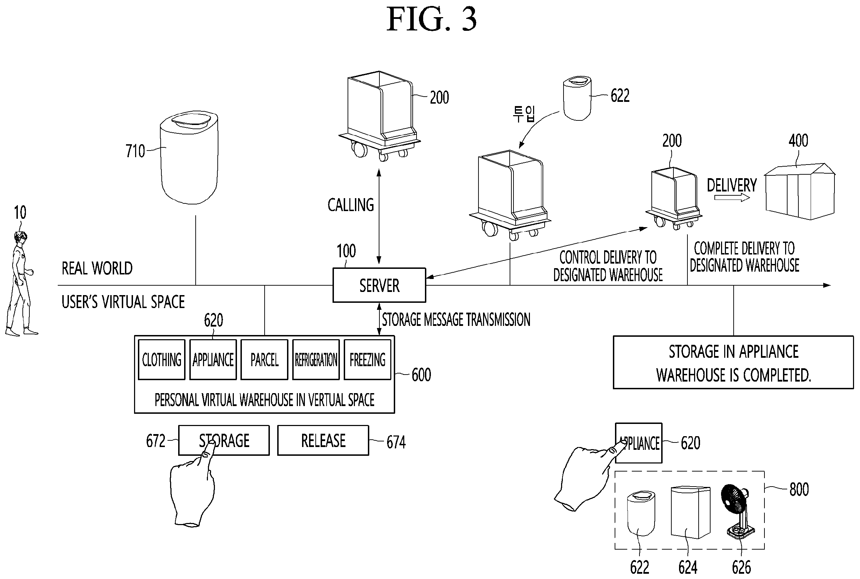

FIG. 3 is a view for explaining a process of storing items in a logistics system according to one embodiment of the present disclosure.

As illustrated in FIG. 3, the present disclosure, if a user character 10 in a virtual space selects an appliance category warehouse 620 among a plurality of category warehouses included in a personal virtual warehouse 600 and select an item storage button 672, can receive an item storage request including information on the appliance category warehouse selected by the user character 10.

Next, the present disclosure can control a delivery robot 200 to be called in the real world and moved to the user's house 500 if an item storage request is received.

Next, the present disclosure can control the delivery robot 200 loaded with the user appliance item 622 to move to the common warehouse 400 when the user appliance item 622 is completed being loaded onto the delivery robot 200.

**In** addition, the present disclosure can complete the delivery of the user appliance items 622 by controlling the delivery robot 200 to store the user appliance items 622 in a category warehouse corresponding to the appliance category warehouse 620 selected by the user character 10 in a virtual space among plurality of category warehouses of the common warehouse 400.

Next, the present disclosure, if delivery of the user appliance items 622 is completed, can transmit a storage message indicating that the user appliance items 622 has been stored in the appliance category warehouse to the user terminal.

Next, the present disclosure can update the information on the item storage status corresponding to the appliance category warehouse 620 of the personal virtual warehouse 600 in the virtual space if the delivery of the user appliance items 622 is completed.

Next, in the present disclosure, after the delivery of the user appliance items 622 is completed, if the user character 10 in the virtual space selects a appliance category warehouse 620 storing the user appliance items among plurality of category warehouses included in the personal virtual warehouse 600, can transmit a user item list 800 stored in a specific category warehouse in the real world to the user terminal.

Here, the user item list 800 may include not only the currently stored user appliance items 622, but also other appliance items 624, 626 that have already been stored previously.

**In** some cases, the present disclosure, if the user character 10 in a virtual space selects the specific category warehouse among a plurality of category warehouses including the personal virtual warehouse 6600, selects a user item to be released among user items stored in the specific category warehouse, and then select an item release button 674, can receive an item release request including information on the specific category warehouse and information on user release item selected by the user character 10.

**In** addition, the present disclosure controls a delivery robot 200 to move to a specific category warehouse of a common warehouse 400 by calling the delivery robot 200 in the real world if a request for item release is received, and if the delivery robot 200 completes putting the user's items stored in the specific category warehouse, the delivery robot 200 carrying the user's items is controlled to move to the user's house, thereby completing the delivery of the user's items.

Here, the present disclosure can transmit a release message to the user terminal indicating that the user item has been released when delivery of the user item is completed.

Next, the present disclosure can update the information on the item storage status corresponding to a specific category warehouse of a personal virtual warehouse 600 in a virtual space when the user's item is delivered.

Next, in the present disclosure, after the delivery of the user's items is completed, if the user character 10 in the virtual space selects a specific category warehouse storing the user's items among a plurality of category warehouses included in the personal virtual warehouse 600, can transmit the user's item list 800 stored in the specific category warehouse in the real world to the user terminal.

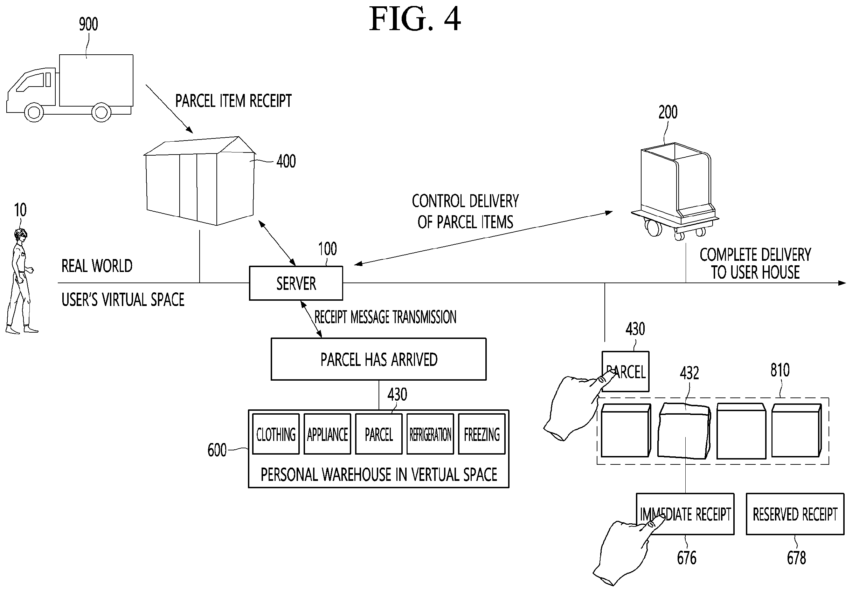

FIG. 4 is a view for explaining a parcel receiving process of a logistics system according to one embodiment of the present disclosure.

As illustrated in FIG. 4, the present disclosure, if a parcel delivered by a parcel delivery vehicle 900 is received to a common warehouse 400 in the real world, can transmit a parcel receipt message to a user terminal corresponding to a recipient of a parcel, updates information on the item storage status corresponding to a parcel category warehouse 430 of a personal virtual warehouse 600 in a virtual space, if a user character 10 selects a parcel category warehouse 430 in the virtual space, provide a list of parcels 810 stored in the parcel category warehouse 430, if the user character 10 selects a specific parcel 432 and immediately selects a receipt request button 676, control to call a delivery robot 200 in the real world and to move the delivery robot 200 to the common warehouse 400, and control the delivery robot 200 to receive the parcel and move to the user's house, thereby completing the delivery of the parcel.

Here, the present disclosure can update the information on the item storage status corresponding to the parcel category warehouse 430 of the personal virtual warehouse 600 in the virtual space if parcel delivery is completed.

Next, the present disclosure, if the user character 10 selects a specific parcel 432 and selects the reserved receipt request button 678, can determine the date and time of the reserved receipt of the parcel, and if the reserved receipt date and time arrive in the real world, call the delivery robot 200 and control the delivery robot 200 to move to the common warehouse 400, and control the delivery robot 200 to receive the parcel and move to the user's house, thereby completing the delivery of the parcel.

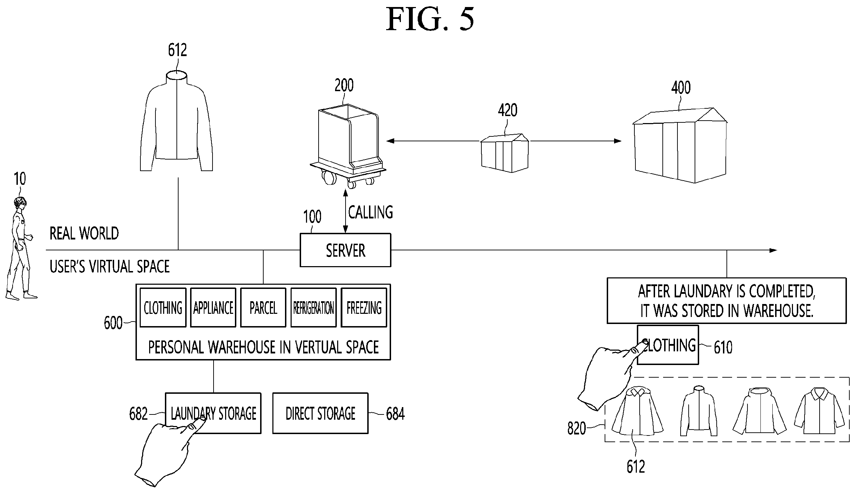

FIG. 5 is a view for explaining a process for storing and washing items in a logistics system according to an embodiment of the present disclosure.

As illustrated in FIG. 5, the present disclosure, if a user character 10 in a virtual space selects a clothing category warehouse 610 among a plurality of category warehouses included in a personal virtual warehouse 600 and selects a laundry storage button 682, can receive a laundry service storage request including information on the clothing category warehouse selected by the user character 10.

Here, the laundry storage button 682 may be a laundry service storage button if the item is clothing, and may be replaced with an inspection service storage button, a cleaning service storage button, a repair service storage button, or the like if the item is an appliance.

In addition, the present disclosure can receive a storage request immediately without laundry service when the user character 10 selects the direct storage button 684 in the virtual space.

Next, the present disclosure, if a laundry service storage request is received, can control a delivery robot 200 to be called in the real world and to move to the user's house, and if the user's clothing items are completed being put into the delivery robot 200, control the delivery robot 200 loaded with the user's clothing items to move to the laundry service warehouse 420.

In addition, the present disclosure can control a delivery robot 200 to deliver the user clothing item 612 for which the laundry service has been completed to a common warehouse 400 if the laundry service for the user clothing item 612 is completed in the laundry service warehouse 420.

Next, the present disclosure can complete the delivery of the user's items by controlling the delivery robot 200 to store the user's clothing items 612 in a category warehouse corresponding to the clothing category warehouse 610 selected by the user character 10 in a virtual space among plurality of category warehouses of the common warehouse 400.

Here, the present disclosure, if the delivery of the user clothing item 612 is completed, can transmit a storage message indicating that the user clothing item 612 for which the laundry service has been completed has been stored in the clothing category warehouse to the user terminal.

In addition, the present disclosure, if the delivery of the user's clothing item is completed, can update the information on the item storage status corresponding to the clothing category warehouse 610 of the personal virtual warehouse 600 in the virtual space.

Next, in the present disclosure, after delivery of the user's clothing items is completed, if the user character 10 in the virtual space selects a clothing category warehouse 610 storing the user's clothing items among a plurality of category warehouses included in the personal virtual warehouse 600, can transmit a list 820 of the user's clothing items stored in the clothing category warehouse in the real world to the user terminal.

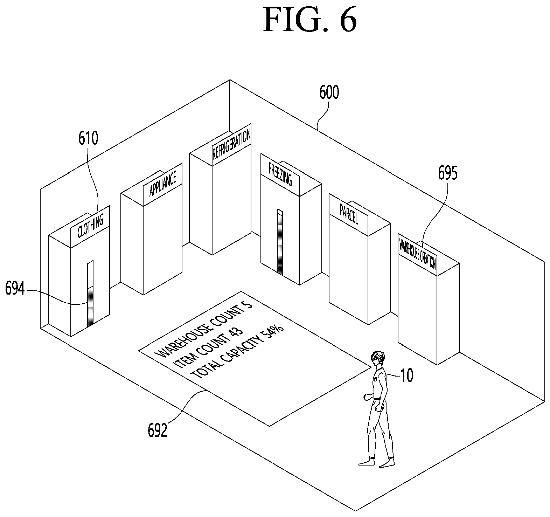

FIG. 6 is a view for explaining a personal virtual warehouse of a logistics system according to one embodiment of the present disclosure.

As illustrated in FIG. 6, the present disclosure can provide a personal virtual warehouse 600 including a plurality of category warehouses classified by item category in a virtual space.

Here, the present disclosure can provide a personal virtual warehouse 600 in which each category warehouse is assigned an individual category name, and category warehouses assigned individual category names are arranged horizontally or stacked vertically.

For example, individual category names may include, but are not limited to, clothing, appliance items, delivery, refrigeration, and freezing.

The plurality of category warehouses may include a clothing category warehouse 610 for storing clothing items, an appliance category warehouse for storing appliance items, a parcel category warehouse for storing delivery items, a refrigerated category warehouse for storing refrigerated items, and a refrigerated category warehouse for storing frozen items.

In addition, in the present disclosure, a plurality of category warehouses may have different shapes, and the shape of each category warehouse may have a representative shape related to an individual category name, but this is only an example and is not limited thereto.

In some cases, in the present disclosure, a plurality of category warehouses have different colors, and the color of each category warehouse may have a representative color associated with an individual category name.

Additionally, the present disclosure may provide a capacity indicator 694 on the surface of each category warehouse that indicates the current item storage capacity relative to the total capacity of the category warehouse.

In addition, the present disclosure may further provide a warehouse creation menu 695 for providing an additional category warehouse in addition to plurality of category warehouses in a personal virtual warehouse 600 of a virtual space.

Here, the present disclosure can provide an additional category warehouse to a personal virtual warehouse 600 when a user character 10 of a virtual space selects a warehouse creation menu 695.

In addition, the present disclosure provides a preset user character 10 by creating it in a virtual space, and if the user character 10 enters a personal virtual warehouse 600, a plurality of category warehouses are arranged in the personal virtual warehouse 600, and personal virtual warehouse information 692 can be displayed on a specific internal surface of the personal virtual warehouse 600.

Here, the personal virtual warehouse information 692 may include information on the number of category warehouses, information on the total number of items stored in the personal virtual warehouse, and information on the ratio of the item storage capacity to the total capacity of the personal virtual warehouse, but this is only an example and is not limited thereto.

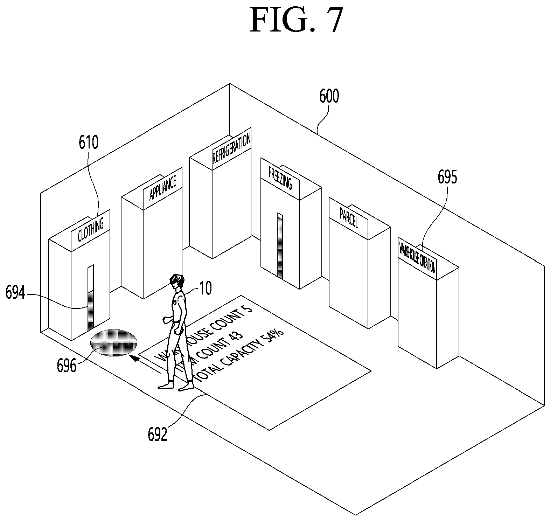

FIGS. 7 to 9 are views for explaining a process of entering a specific category warehouse of a personal virtual warehouse according to an embodiment of the present disclosure.

As illustrated in FIG. 7, the present disclosure allows a space movement area 696 of a specific shape to be formed on the floor surface surrounding the clothing category warehouse 610 if the user character 10 approaches the clothing category warehouse 610.

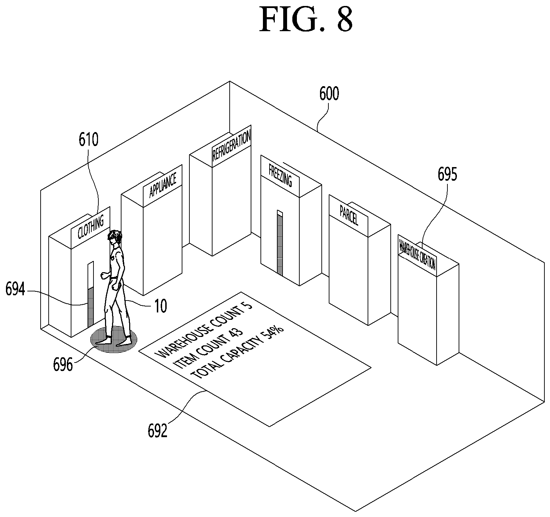

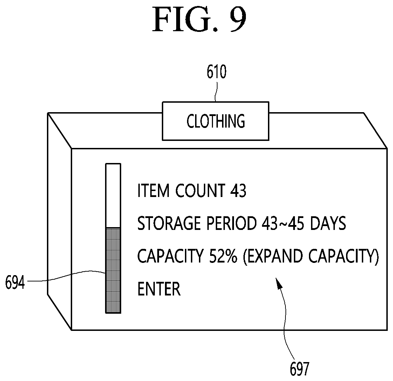

Next, as illustrated in FIGS. 8 and 9, the present disclosure may generate warehouse information 697 for a clothing category warehouse 610 and an entry button on the surface of the clothing category warehouse 610 if a user character 10 enters a space movement area 696.

Here, the present disclosure can control the user character 10 to move spatially inside the clothing category warehouse 610 when the user character 10 selects the enter button.

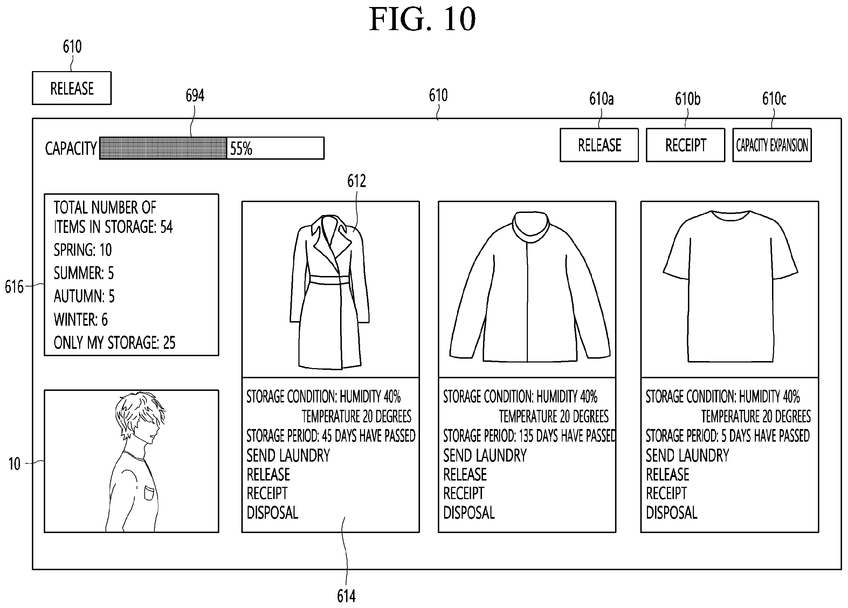

FIG. 10 is a view for explaining the interior of a specific category warehouse of a personal virtual warehouse according to one embodiment of the present disclosure.

As illustrated in FIG. 10, the present disclosure, if a user character 10 enters a clothing category warehouse 610, can provide overall item information 616 for clothing items 612 stored in a clothing category warehouse 610 and individual item information 614 for each stored clothing item 612.

For example, the overall item information 616 may include information on the total number of stored items and information on the number of stored items by entry classified into a specific item, and the individual item information 612 may include information on storage status, storage period information, and information on user request selection entry.

Here, the user request selection entry information may include, release request entry information, receipt request entry information, disposal request entry information, and specific service request entry information, but this is only an example and is not limited thereto.

In addition, specific service request entry information may include a laundry service request item if the item is clothing, and an inspection service item, a cleaning service item, and a repair service item if the item is an appliance, but this is only an example and is not limited thereto.

In addition, the present disclosure, if the user character 10 enters the clothing category warehouse 610, can provide a capacity indicator 694 that displays information on the ratio of the item storage capacity to the total capacity of the clothing category warehouse 610, a user release input button (610a) for requesting release, a user receipt input button 610b for requesting receipt, and a user capacity expansion input button 610c for requesting capacity expansion.

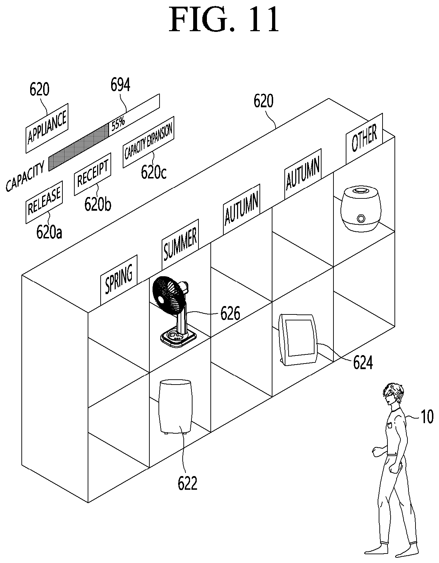

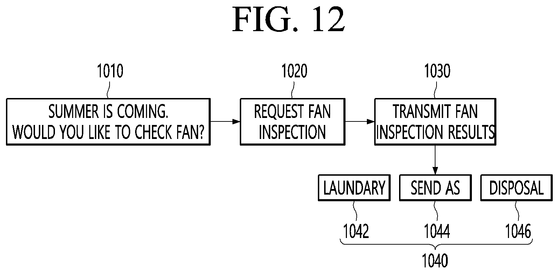

FIG. 11 and FIG. 12 are views for explaining a process for providing an appliance inspection service corresponding to an appliance category warehouse of a personal virtual warehouse according to one embodiment of the present disclosure.

As illustrated in FIG. 11, the present disclosure, if a user character 10 enters the appliance category warehouse 620, can provide a capacity indicator 694 that displays information on the ratio of the item storage capacity to the total capacity of the appliance category warehouse 620, a user release input button 620a for requesting release, a user receipt input button 620b for requesting receipt, and a user capacity expansion input button 620c for requesting capacity expansion.

In addition, in the present disclosure, appliance items 622, 624, 626 can be stored in an appliance category warehouse 620 classified by season.

Next, as illustrated in FIG. 12, the present disclosure can control the storage of the user's items by classifying the user's items by season if the items to be stored are items of a category that are used only in a specific season.

Here, items in a category that are only used in a specific season may include items related to clothing and items related to appliance items, but this is only an example and is not limited thereto.

For example, the present disclosure can check a user's appliance items stored in a appliance category warehouse in a seasonal cycle in the real world, select appliance items needed for each season, and transmit an inspection request message for the selected appliance items to a user terminal 1010.

Here, the present disclosure can check the user's appliance items when checking the user's appliance items stored in the appliance category warehouse on a preset date or during a preset period before a specific season approaches.

Next, in the present disclosure, if an item inspection request is received from a user terminal 1020, can request an external management company to inspect the corresponding user's item, if the user's item inspection is completed, transmit the item inspection contents to the user terminal 1030, if the user character checks the item inspection contents in the virtual space, provide an item service request button 1040 including a cleaning service request item 1042, a repair service request item 1044, and a disposal service request item 1046 in the virtual space, and if the user character selects the service request button 1040, request the corresponding item service from the external management company in the real world.

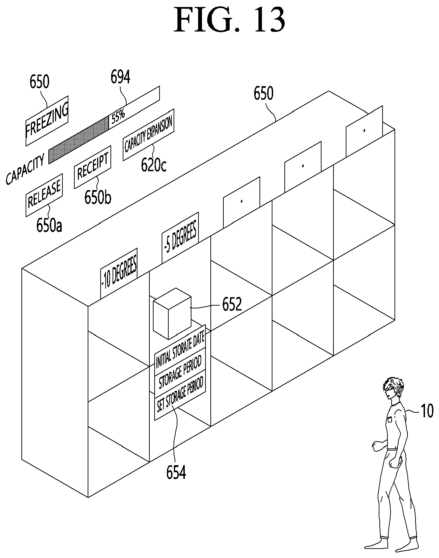

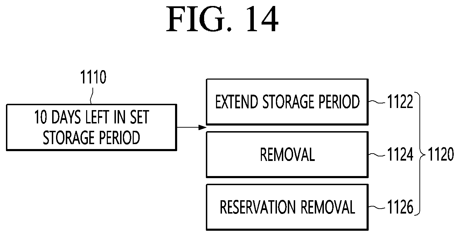

FIG. 13 and FIG. 14 are views for explaining a process for providing a storage period notification service corresponding to a frozen category warehouse of a personal virtual warehouse according to one embodiment of the present disclosure.

As illustrated in FIG. 13, the present disclosure, if a user character 10 enters a frozen category warehouse 650, can provide a capacity indicator 694 that displays information on the ratio of the item storage capacity to the total capacity of the frozen category warehouse 650, a user release input button 650a for requesting release, a user receipt input button 650b for requesting receipt, and a user capacity expansion input button 650c for requesting capacity expansion.

In addition, the present disclosure, if the user's items to be stored are items 652 that require refrigeration or freezing, can control the storage of the user's items 652 by classifying the user's items by temperature.

Here, the present disclosure, if the user's items 652 to be stored are items which require refrigeration or freezing and have an expiration date, can control to store the user's items by setting a storage period 654 for the items of the user.

As illustrated in FIG. 14, the present disclosure, in the real world, can check the storage period for a user's items stored in a frozen category warehouse 650, and, if there are any items of the user whose storage end date is approaching, transmit a storage termination message including information on the remaining storage days to the user terminal before the storage end date 1110.

Next, the present disclosure can control to provide an item service request button 1120 including a storage period extension request item 1122, a removal request item 1124, and a reservation removal request item 1126 in the virtual space if the user character checks a storage termination message in the virtual space, and to provide the corresponding item service in the real world if the user character selects the service request button 1120.

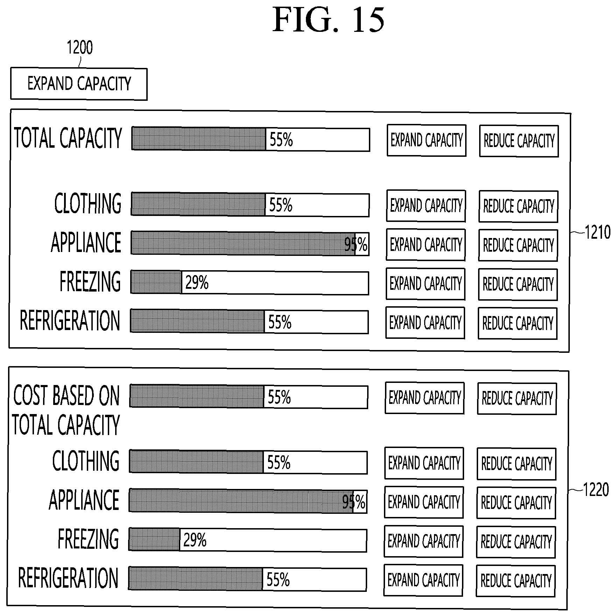

FIG. 15 is a view for explaining a process of expanding the capacity of a personal virtual warehouse according to one embodiment of the present disclosure.

As illustrated in FIG. 15, the present disclosure, if a request for capacity expansion for a personal virtual warehouse in a virtual space is received from a user terminal, can provide a full capacity contract window 1210 for the personal virtual warehouse to the user terminal, and if full capacity contract information for all stored items is provided and a corresponding cost is paid through the full capacity contract window 1210 from the user terminal, provide a personal virtual warehouse with an expanded full capacity corresponding to the full capacity contract information.

In another case, the present disclosure, if receiving a request for capacity expansion for a personal virtual warehouse in a virtual space from a user terminal, can provide an individual capacity contract window 1220 for the individual virtual warehouse to the user terminal, and if individual capacity contract information for each stored item is provided and a corresponding cost is paid by the user terminal through the individual capacity contract window 1220, provide a personal virtual warehouse with an expanded individual capacity for each stored item in accordance with the individual capacity contract information.

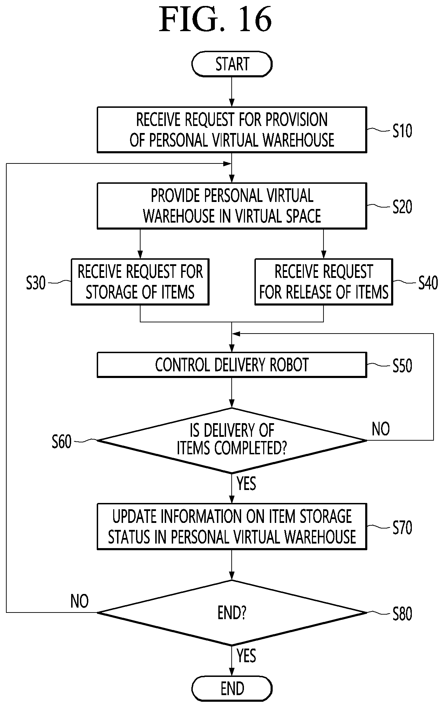

FIG. 16 is a flowchart for explaining a control process of a logistics system according to one embodiment of the present disclosure.

As illustrated in FIG. 16, the present disclosure can receive a request for provision of a personal virtual warehouse from a user terminal (S10).

Next, the present disclosure can provide a personal virtual warehouse in a virtual space to a user terminal (S20).

Next, the present disclosure can receive a request for storage (S30) or release (S40) of goods from a user terminal through a personal virtual warehouse in a virtual space.

In addition, the present disclosure, if a request for storing an item is received, can collect a user's item in the real world and deliver the user's item to a common warehouse or if a request for releasing an item is received, collect a user's item stored in a common warehouse in the real world and deliver the user's item to the user's house (S50).

Next, in the present disclosure, if the storage or release of items by a delivery robot is completed (S60), can update the information on item storage status in a personal virtual warehouse in a virtual space based on the information on the actual item storage status in a common warehouse in the real world (S70).

Next, the present disclosure checks whether the item system is terminated (S80), and if a termination request is made, the item system can be terminated.

In this way, the present disclosure, if receiving a request to store or release items through a personal virtual warehouse in a virtual space, can improve user convenience at a minimum cost while increasing spatial efficiency by utilizing a common warehouse without being restricted by spatial constraints, by collecting the user's items in the real world through a delivery robot and delivering the user's items to a common warehouse, or by collecting the user's items stored in the common warehouse and delivering the user's items to the user's house.

The present disclosure utilizes robots as an intermediary between the metaverse/virtual space and the real world, and utilizes a specialized storage system warehouse for items that are difficult to store at home, thereby increasing the efficiency of storage space at home and enabling efficient use of space.

In addition, the present disclosure can provide a more realistic service by narrowing the gap between a virtual warehouse and a real-world common warehouse by utilizing a robot as an intermediary.

In addition, the present disclosure can provide care services through linked services for each item.

For example, the present disclosure can maximize user convenience by allowing users to immediately perform cumbersome tasks that must be performed separately, such as washing, cleaning, repairing, and disposing of items, through additional linked services.

In addition, the present disclosure has the advantage that the subdivision of the warehouse can be configured in various ways according to the user's preference, and the expansion of the warehouse is infinite.

In addition, the present disclosure can have the effect of moving beyond simple storage of existing items through the metaverse to storing and managing items, and using the items immediately at any time by using a robot as an intermediary when the items are to be used.

### [Industrial Applicability]

The logistics system utilizing the metaverse according to the present disclosure has remarkable industrial applicability because it has the effect of improving user convenience at a minimal cost while increasing spatial efficiency.

## Claims

1. A logistics system using metaverse comprising:
a common warehouse storing items of a plurality of users;
a delivery robot delivering the items of the user;
a server controlling the delivery robot; and,
a user terminal communicating with the server,
wherein the server,
if a request for provision of a personal virtual warehouse is received from the user terminal, provides a personal virtual warehouse in a virtual space to the user terminal, if a request for storage or release of items is received from the user terminal through the personal virtual warehouse in the virtual space, controls the delivery robot to collect the items of the user in the real world and deliver the items of the user to the common warehouse or to collect the items of the user stored in the common warehouse and deliver the items of the user to the user's house, and if the storage or release of items by the delivery robot is completed, updates the information on the item storage status of the personal virtual warehouse in the virtual space based on the information on the actual item storage status of the common warehouse in the real world.

2. The logistics system using metaverse of claim 1,
wherein the server,
when providing a personal virtual warehouse of the virtual space, provides the personal virtual warehouse including a plurality of category warehouses classified by item category in the virtual space.

3. The logistics system using metaverse of claim 2,
wherein the server provides a capacity indicator on the surface of each category warehouse to indicate the current item storage capacity compared to the total capacity of the category warehouse.

4. The logistics system using metaverse of claim 1,
wherein the server,
when receiving the item storage request, if the user character in the virtual space selects a specific category warehouse among the plurality of category warehouses included in the personal virtual warehouse and selects the item storage button, receives an item storage request including information on the specific category warehouse selected by the user character from the user terminal.

5. The logistics system using metaverse of claim 3,
wherein the server,
when controlling the delivery robot, if receiving an item storage request from the user terminal, controls the delivery robot to move to the user's house by calling the delivery robot in the real world, and if the user's items are completed being put into the delivery robot, controls the delivery robot loaded with the user's items to move to the common warehouse, controls the delivery robot to store the user's items in a category warehouse corresponding to a specific category warehouse selected by the user character in the virtual space among a plurality of category warehouses in the common warehouse, thereby completing the delivery of the user's items.

6. The logistics system using metaverse of claim 1,
wherein the server,
when receiving the item delivery request, if the user character selects a specific category warehouse among the plurality of category warehouses included in the personal virtual warehouse in the virtual space, selects a user item to be released among the user items stored in the specific category warehouse, and then selects an item release button, receives an item release request including information on the specific category warehouse selected by the user character and information on user release items from the user terminal.

7. The logistics system using metaverse of claim 6,
wherein the server,
when controlling the delivery robot, if receiving the item release request from the user terminal, controls the delivery robot to move to a specific category warehouse of the common warehouse by calling the delivery robot in the real world, and if the delivery robot completes putting the user's items stored in the specific category warehouse, controls the delivery robot carrying the user's items to move to the user's house, thereby completing the delivery of the user's items.

8. The logistics system using metaverse of claim 1,
wherein the server,
if controlling the delivery robot, if a parcel is received in the common warehouse of the real world, transmits a parcel arrival message to a user terminal corresponding to the recipient of the parcel, updates information on the item storage status corresponding to the parcel category warehouse of the personal virtual warehouse in the virtual space, if the user character selects the parcel category warehouse in the virtual space, provides a list of parcels stored in the parcel category warehouse, if the user character selects a specific parcel and immediately selects a receipt request button, calls a delivery robot in the real world and controls the delivery robot to move to the common warehouse, and controls the delivery robot to receive the parcel and move to the user's house to complete the delivery of the parcel.

9. The logistics system using metaverse of claim 1,
wherein the server,
when receiving the item storage request, if the user character in the virtual space selects a specific category warehouse among the plurality of category warehouses included in the personal virtual warehouse and selects the item specific service storage button, receives an item specific service storage request including the specific category warehouse information selected by the user character from the user terminal.

10. The logistics system using metaverse of claim 9,
wherein the server,
when controlling the delivery robot, if receiving a request for storing a specific item service from the user terminal, controls the delivery robot to move to the user's house by calling the delivery robot in the real world, if the user's item is put into the delivery robot, controls the delivery robot loaded with the user's item to move to the service warehouse, if the specific service for the user's item is completed in the service warehouse, controls the delivery robot to deliver the user's item for which the specific service has been completed to the common warehouse, and controls the delivery robot to store the user's item in a category warehouse corresponding to a specific category warehouse selected by the user character in the virtual space among a plurality of category warehouses in the common warehouse, thereby completing the delivery of the user's item.

11. The logistics system using metaverse of claim 1,
wherein the server, when storing the user's items in the common warehouse, if the items of the user to be stored are items of a category used only in a specific season, controls the storage of the users' items by classifying the users' items by season.

12. The logistics system using metaverse of claim 11,
wherein the server,
in the real world, checks the user's items stored in the common warehouse in a seasonal cycle, selects items needed for each season, and transmits an inspection request message for the selected items to the user terminal.

13. The logistics system using metaverse of claim 1,
wherein the server, when storing the user's items in the common warehouse, if the items of the user to be stored are items that require refrigeration or freezing, controls to store the items of the user by classifying the items of the user by temperature.

14. The logistics system using metaverse of claim 13,
wherein the server, if the items of the user to be stored are items that require refrigeration or freezing and have an expiration date, controls to set the storage period for the items of the corresponding user and to store the items.

15. A method for controlling a logistics system performed by a server communicating a delivery robot and a user terminal, comprising:
receiving a request for providing a personal virtual warehouse from the user terminal;
providing the personal virtual warehouse in a virtual space to the user terminal;
receiving a request for storage or release of items through a personal virtual warehouse in the virtual space from the user terminal;
controlling the delivery robot to collect the user's items in the real world and deliver the user's items to the common warehouse if the request for storing items is received, or to collect the user's items stored in the common warehouse in the real world and deliver the user's items to the user's house if the item release request is received; and
updating the information on the item storage status of the personal virtual warehouse in the virtual space based on the information on the actual item storage status of the common warehouse in the real world if the item storage or item release by the delivery robot is completed.
